# FASCICULE DE BREVET EUROPEEN

(11) **EP 0 577 440 B1**
(45) Date de publication et mention de la délivrance du brevet: **30.10.1996**
(21) Numéro de dépôt: 93400216.3
(22) Date de dépôt: 28.01.1993
(51) Int. Cl.: B23K 7/00, B08B 15/02, B22D 11/126

(54) **Installation de découpe de ferraille par oxycoupage**
Brennschneidmaschine
Flame-cutting machine

(30) Priorité: 03.07.1992 FR 9208217
(43) Date de publication de la demande: 05.01.1994
(73) Titulaire: SOLOMAT S.A. Société dite:, F-59430 Saint Pol Sur Mer (Nord) (FR)
(72) Inventeur: Ibar, Jean-Henri, F-59430 Saint Pol Sur Mer (Nord) (FR)
(74) Mandataire: Cabinet HERRBURGER

(56) Documents cités:
- EP-A- 0 051 250
- US-A- 2 693 749
- US-A- 4 441 934
- PATENT ABSTRACTS OF JAPAN vol. 7, no. 207 (M-242)(1352) 13 Septembre 1983 & JP-A-58 103 962 (KOBE SEIKOSHO) 21 Juin 1983

## Description

La présente invention a pour objet une installation de découpe de ferraille par oxycoupage comportant un banc de découpe pour y déposer la ferraille à découper, une potence porte-chalumeau munie de moyens pour porter une pluralité de chalumeaux situés au-dessus de la ferraille à découper la potence étant mobile sur des rails disposés parallèles au banc de découpe pour déplacer les chalumeaux au fur et à mesure de la progression de la découpe.

La découpe de ferraille est couramment utilisée dans la sidérurgie pour découper des ferrailles de diverses origines destinées à être recyclées après une mise à dimension adéquate pour permettre leur manipulation ; parmi les ferrailles à découper on trouve notamment des brames, des loups de répartiteur, des tôles, des bobines et autres ferrailles de grandes dimensions.

L'oxycoupage est un procédé connu de sectionnement des métaux par combustion localisée et continue due à l'action d'un jet d'oxygène pur agissant sur un point préalablement porté à température convenable (température d'amorçage) ; pour ce faire, on dispose d'un chalumeau coupeur possédant une tête de coupe munie d'un orifice de coupe et de plusieurs orifices de chauffe ; par les orifices de chauffe on peut amener par exemple du gaz naturel destiné à porter le point d'amorçage à la température convenable (1300°) et à maintenir cette température sur l'arête de la saignée pendant tout le temps nécessaire à la progression de l'opération d'oxycoupage ; par l'orifice de coupe on amène de l'oxygène extrêmement pur, de l'ordre de 99,5 % ou plus, pour réaliser la combustion dans la saignée étroite à travers l'épaisseur du métal ; ainsi l'oxydation du fer devient quasiment instantanée et, la réaction étant fortement exothermique, la chaleur dégagée échauffe les zones voisines favorisant ainsi une attaque de proche en proche. Pour certaines applications, on peut envisager de remplacer le gaz naturel de chauffe par de l'acétylène, du tétrène ou du propane.

La récupération de ferraille en général, et les opérations d'oxycoupage en particulier, ne sont pas des opérations "propres". En effet, d'une part, il se produit des déchets de combustion, par exemple des scories accompagnées de poussières diverses, d'autre part, il y a une forte production de vapeurs et de fumées notamment des fumées rousses sous forme d'oxyde d'azote NOₓ, notamment NO₂ et aussi de SO₃ et encore de HCl.

Par la demande japonaise antérieure N° JP-A-58-103 962, il est décrit une installation de découpe de ferraille par oxycoupage conforme au préambule de la revendication 1 et comportant une potence porte-chalumeaux mobile sur des rails, disposée parallèlement au banc de découpe pour déplacer les chalumeaux au fur et à mesure de la progression de la découpe.

Cette installation comporte une fosse remplie d'eau et les chalumeaux sont logés dans un caisson étanche muni d'une hotte reliée à des moyens d'aspiration et de soufflage. Dans ce cas, l'objet à découper est placé par sa face inférieure au niveau de la surface de l'eau de sorte que l'oxycoupage provoque la création, dans la hotte, d'une atmosphère de vapeur.

Egalement, suivant la demande européenne EP-A-0 051 250, il est décrit une potence mobile sur des rails disposés parallèlement au banc de découpe pour déplacer les chalumeaux au fur et à mesure de la progression de la découpe.

Vis-à-vis de ces dispositifs connus, la présente invention concerne une installation de découpe de ferraille par oxycoupage comportant un banc de découpe pour y déposer la ferraille à découper, une fosse en forme de canal rempli d'eau disposé au-dessous du banc de découpe, lequel banc de découpe est ajouré pour permettre la chute des scories de découpe directement dans l'eau de la fosse, une potence porte-chalumeaux munie de moyens pour porter une pluralité de chalumeaux situés au-dessus de la ferraille à découper, la potence étant mobile sur des rails disposés parallèles au banc de découpe pour déplacer les chalumeaux au fur et à mesure de la progression de la découpe, les chalumeaux étant logés au sein d'un caisson d'aspiration solidaire de la potence pour aspirer les vapeurs, fumées rousses et poussières émises pendant l'opération de découpe, caractérisé en ce que le caisson étanche comporte au moins deux hottes d'aspiration, à savoir, d'une part, une hotte de type classique disposée au-dessus de la zone de découpe et dont l'aspiration s'exerce verticalement vers le haut, d'autre part, une hotte d'aspiration ayant une ouverture longitudinale disposée horizontalement parallèlement au banc de découpe et à la hauteur de celui-ci et dont l'aspiration s'exerce horizontalement dans un sens perpendiculaire au banc de découpe.

Ainsi, d'une part, on obtient une granulation et l'extinction des projections de découpe au moment où elles tombent dans l'eau, d'autre part, les diverses fumées et poussières émises pendant l'opération de découpe sont aspirées par la hotte d'aspiration.

Selon une autre caractéristique de l'invention, dans la fosse, partiellement immergés en dessous des fers plats, sont prévus des supports latéraux disposés transversalement pour canaliser l'aspiration qui s'exerce horizontalement.

Selon une autre caractéristique de l'invention, le banc de découpe ajouré est constitué par des fers plats posés sur champ et en biais entre des plots prévus à cet effet sur le pourtour longitudinal de la fosse.

Selon une autre caractéristique de l'invention, les chalumeaux sont disposés alignés les uns par rapport aux autres et cet alignement est disposé rotatif sur 90° autour d'un axe vertical pour être disposé soit parallèlement, soit perpendiculairement au banc de découpe.

La présente invention comporte encore d'autres avantages qui seront bien compris au vu de la description d'un exemple de réalisation illustré par les dessins annexés.

Les figures 1a, 1b, 1c sont, respectivement, des vues de face, de dessus, de profil, d'une installation de découpe conforme à l'invention.

La figure 2 est une vue synoptique du caisson étanche de captation des fumées.

La figure 3 est une vue en coupe de la section en forme de navette d'un conduit de sortie.

Les figures 4a et 4b sont deux vues en coupe de la figure 3 qui montrent la gaine d'aspiration fixe avec ses lèvres souples.

La figure 5 est une vue de dessus d'une installation similaire à celle de la figure 1b mais comportant deux potences.

La figure 6 montre comment on peut découper une brame en dix ou onze tranches selon que l'on opère longitudinalement ou transversalement grâce à la rotation de 90° du chariot autour d'un axe vertical.

La figure 7 montre le banc de découpe avec une vue de profil 7A et une vue de dessus 7B.

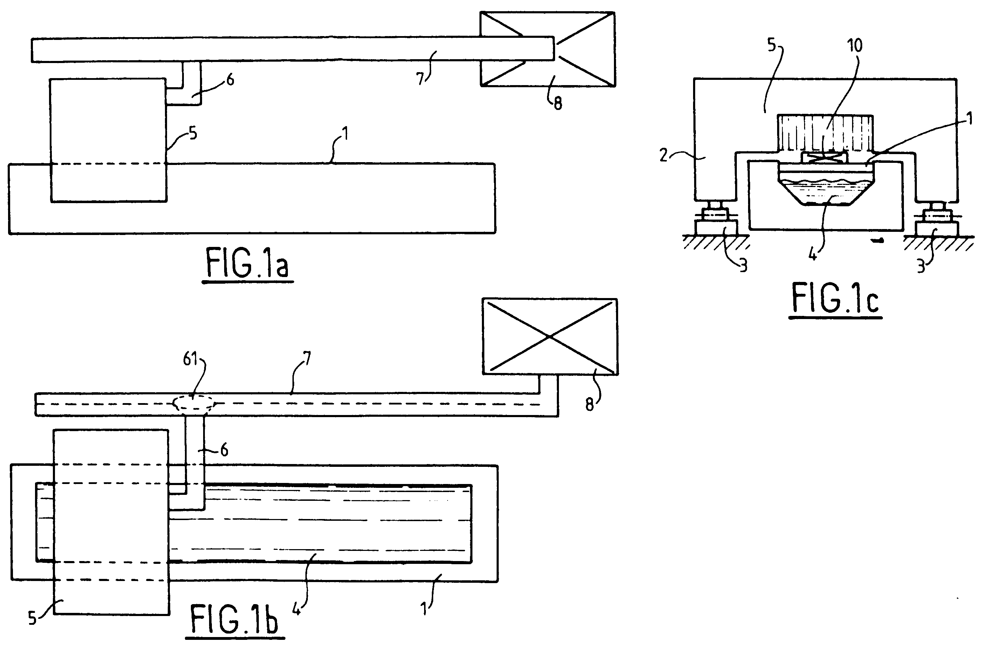

La figure 1 avec ses différentes vues 1a de face, 1b de dessus et 1c de profil, représente une vue d'ensemble d'une installation de découpe de ferraille par oxycoupage conforme à l'invention ; cette installation comporte un banc de découpe 1 sur lequel on dépose la ferraille 10 à découper, des chalumeaux de découpe (non visibles sur la figure 1) logés dans un caisson étanche 5 ; du caisson étanche 5 sort un conduit 6, lequel est relié à une gaine d'aspiration 7 au moyen d'une navette 61, la gaine d'aspiration 7 mène à une unité de traitement 8 de dépoussiérage et de dénitrification, dans le banc de découpe 1 est aménagée une fosse 4 en forme de canal rempli d'eau ; les chalumeaux sont soutenus par une potence 2, laquelle est solidaire du caisson étanche 5, la potence 2 est mobile sur des rails 3 disposés parallèles au banc de découpe pour déplacer la potence, et donc les chalumeaux, longitudinalement le long du banc de découpe.

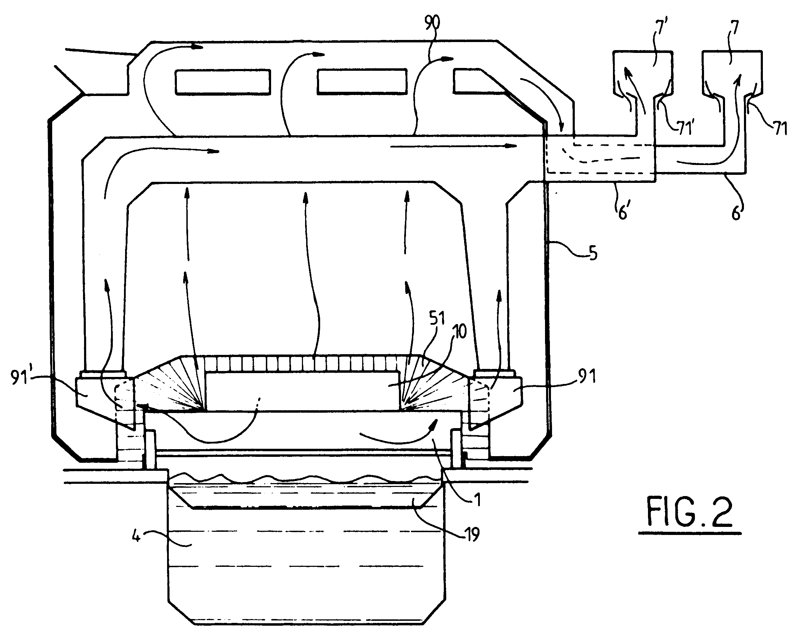

La figure 2 est une vue agrandie de la figure 1c sur laquelle sont représentés la fosse 4 remplie d'eau, le banc de découpe 1 sur lequel est déposée une brame 10, et le caisson étanche 5 ; le caisson étanche 5 enveloppe largement la zone de découpe et il est muni sur ses côtés perpendiculaires au banc de découpe de lèvres souples 51 pour assurer l'étanchéité au droit des ferrailles 10 disposées sur le banc de découpe 1 ; à l'intérieur du caisson 5 sont logées deux hottes d'aspiration 90, 91 ; la hotte d'aspiration 90 est une hotte de type classique disposée au-dessus de la zone de découpe et dont l'aspiration s'exerce verticalement vers le haut ; la hotte d'aspiration 90 est connectée à la gaine d'aspiration 7 munie de lèvres souples 71 au moyen du conduit d'aspiration 6 ; la deuxième hotte d'aspiration 91 comporte une ouverture longitudinale disposée horizontalement parallèlement au banc de découpe et à la hauteur de celui-ci, son aspiration s'exerce horizontalement dans un sens perpendiculaire au banc de découpe ; la hotte d'aspiration 91 est connectée à la gaine d'aspiration 7' munie de lèvres souples 71' au moyen d'un conduit 6' ; il est clair que les gaines d'aspiration 7 et 7' peuvent en fait n'être qu'une seule et même gaine de même que les conduits 6 et 6' peuvent être confondus tout au moins jusqu'à leur arrivée au niveau du caisson 5 ; à ce moment, il est souhaitable que les sections des conduits soient adaptables, et même réglables à la demande, pour adapter au mieux le débit d'aspiration de chaque hotte ; on a constaté que pratiquement il était préférable que l'aspiration s'effectue dans la proportion de 80/20, c'est-à-dire que la hotte d'aspiration 91 est quatre fois plus puissante que la hotte d'aspiration 90.

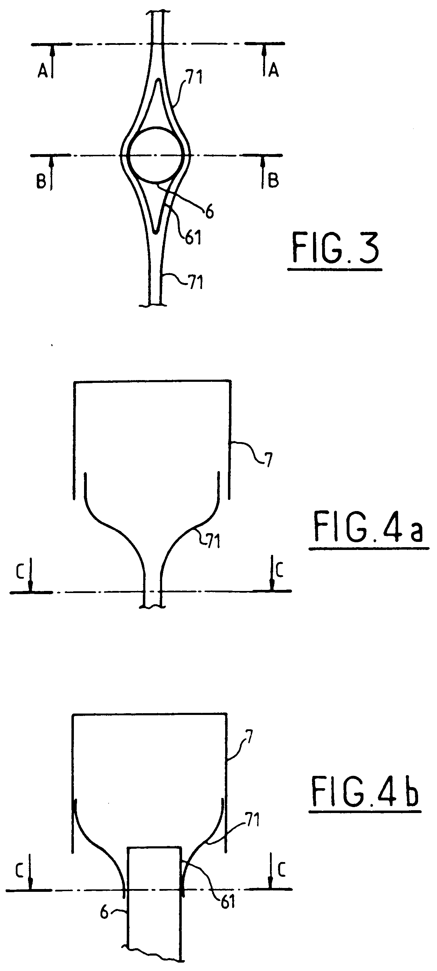

La figure 3 est une coupe du conduit 6 et de la gaine d'aspiration 7 au niveau de la navette 61 ; les figures 4a et 4b sont des coupes de la figure 3 respectivement selon les lignes A-A et B-B ; sur les figures 4a et 4b est représentée la ligne de coupe C-C correspondant à la coupe de la figure 3 ; sur la figure 3 on voit bien la forme allongée de la navette 61 qui constitue l'extrémité du conduit 6, la navette 61 est introduite entre les lèvres souples 71 de la gaine 7 de sorte qu'elle peut se déplacer longitudinalement le long du banc de découpe avec conservation de l'étanchéité puisque l'aspiration qui règne dans la gaine 7 assure que les lèvres souples 71 sont constamment plaquées contre la navette 61 ; ceci est aussi visible sur la figure 4b, c'est-à-dire la coupe B-B de la figure 3, où l'on voit la gaine d'aspiration 7 avec ses lèvres souples 71 plaquées contre la navette 61 qui constitue l'extrémité du conduit 6 ; sur la figure 4a, coupe A-A de la figure 3, on voit la gaine d'aspiration 7 à un endroit qui n'est pas en vis-à-vis d'un conduit 6, dans ce cas, les lèvres souples 71 sont simplement plaquées d'une manière étanche l'une contre l'autre toujours du fait de l'aspiration.

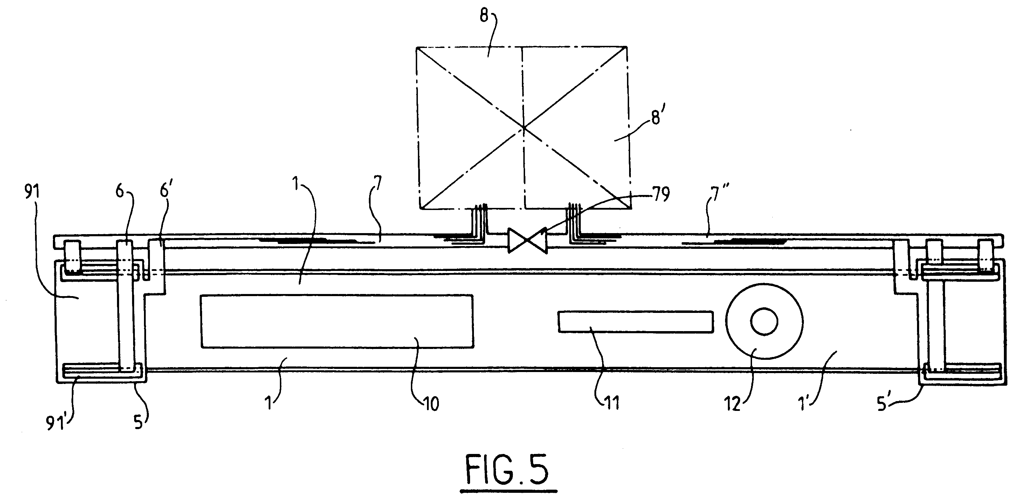

Sur la figure 5 est représentée une installation de découpe de ferraille par oxycoupage plus étendue que celle précédemment décrite notamment dans la figure 1b, laquelle est tout à fait similaire à la partie gauche de la figure 5 ; en fait, la figure 5 est un simple doublement de l'installation de découpe de la figure 1b avec le banc de découpe 1, 1', deux caissons étanches 5, 5', deux gaines 7, 7'' disposées dans le prolongement l'une de l'autre et éventuellement deux unités de traitement 8, 8' de dépoussiérage et de dénitrification ; on peut prévoir une vanne 79 pour connecter ou non, à la demande, l'une et/ou l'autre des gaines 7, 7'' à l'une et/ou l'autre des unités de traitement 8, 8' ; sur le banc de découpe 1, 1' sont représentées une brame 10, un loup 11 et une bobine 12 à titre d'exemple de ferrailles à découper ; la potence 5' peut comporter des chalumeaux spécialement disposés pour la découpe en croix des bobines 12 ; similairement, la potence 5 peut être dédiée à la découpe des brames 10 et le banc de découpe 1 peut être prévu assez long pour que pendant la découpe d'une brame sur une première moitié du banc 1, l'on puisse effectuer des opérations de manutention de brame sur l'autre moitié du banc 1 ; la vue de la potence 5 de la figure 5 peut être considérée comme une vue de dessus du caisson de la figure 2, on voit ainsi plus clairement la disposition des hottes d'aspiration horizontales 91, 91'.

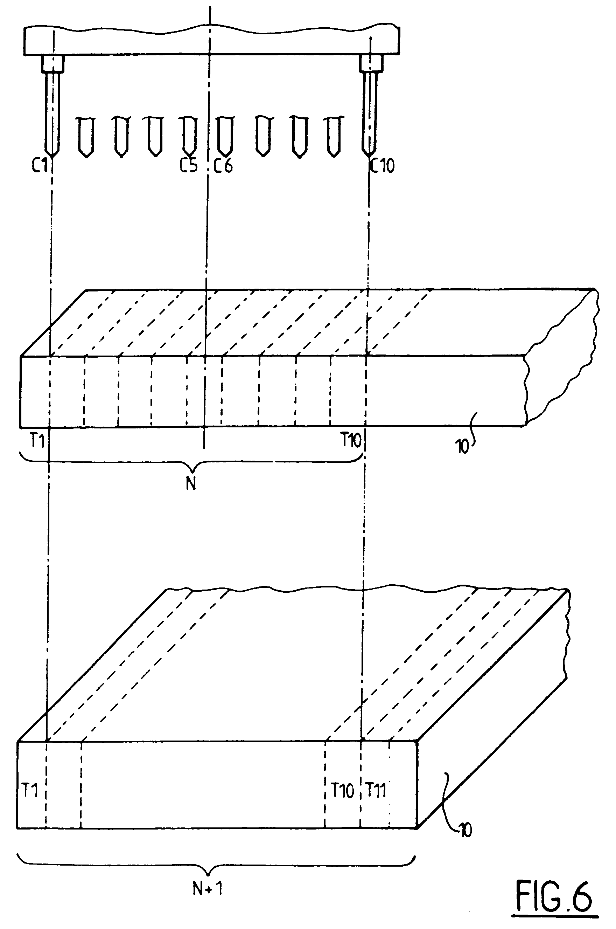

Sur la figure 6 est représenté ce qu'il est possible de faire avec une telle installation, par exemple avec une tête porte-chalumeaux munie de dix chalumeaux c1 à c10 ; si l'on découpe une brame transversalement, on obtient dix tranches de brame simultanément ; alors que si on la découpe longitudinalement, on peut obtenir jusqu'à 11 tranches ; pour ce faire, en admettant que la brame est toujours disposée longitudinalement sur le banc de découpe 1, il est prévu de pouvoir faire pivoter de 90° autour d'un axe vertical le porte-chalumeaux ; il est aussi prévu, pour pouvoir s'adapter aux diverses dimensions des brames, de pouvoir modifier à la demande l'écartement des chalumeaux l'un par rapport à l'autre ; dans le même but, le porte-chalumeaux est prévu mobile dans le sens vertical pour pouvoir se rapprocher ou se dégager des brames à découper ; bien entendu, pour une découpe transversale, le porte-chariot est encore prévu mobile transversalement par rapport au banc de découpe ; ainsi, le chariot porte-chalumeaux est mobile dans les trois axes ; pour obtenir cette mobilité, il est prévu des unités de motorisation avec motoréducteur, galets porteurs globiques, galets de came de guidage, et vis à bille étanches aux poussières de sorte que tous ces éléments peuvent être commandés à distance et même programmés au moyen d'une armoire électrique embarquée à l'intérieur d'une cabine protégée contre les intempéries et d'un pupitre de commande à la disposition d'un opérateur.

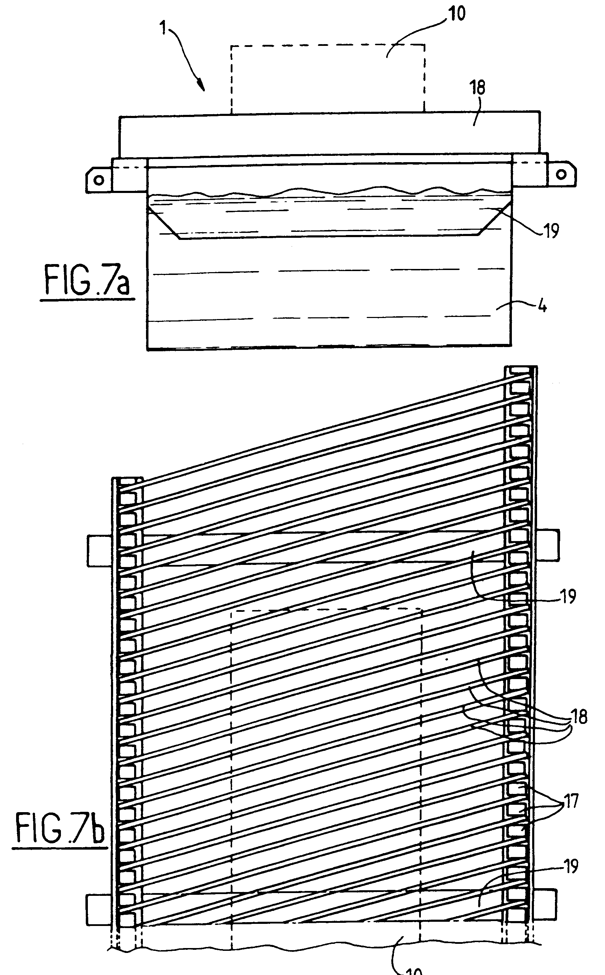

La figure 7A représente un banc de découpe 1 comportant une fosse 4 remplie d'eau au-dessus de laquelle sont disposés des fers plats 18 disposés sur champ et en biais ainsi qu'on le voit bien sur la figure 7B en vue de dessus ; les fers plats 18 peuvent être juste posés entre des plots 17 prévus à cet effet sur le pourtour longitudinal de la fosse 4 ; les fers plats 18 dont la dimension est par exemple 3500 x 350 x 40 mm sont disposés en nombre suffisant pour couvrir toute la fosse ; les fers plats 18 constituent le banc de découpe sur lequel est déposée la ferraille à découper, par exemple une brame 10 telle que représentée en pointillés ; en dessous des fers plats 18 et à moitié immergés dans l'eau de la fosse 4, sont disposés transversalement les supports latéraux 19 pour canaliser l'aspiration qui s'exerce horizontalement ; les supports latéraux 19 complètent donc l'action d'étanchéité obtenue par les lèvres souples 51 représentées sur la figure 2 dont on remarquera que, au moins dans sa partie basse, elle est similaire à la figure 7A ; plusieurs supports latéraux 19 sont prévus pour coopérer avec la cabine étanche 5 quel que soit son emplacement sur les rails 3 ; ainsi, le banc de découpe présente des jours entre les fers plats 18 de sorte que les scories de découpe peuvent tomber dans l'eau et y être rapidement refroidies ; bien entendu, lors de la découpe d'une ferraille telle que la brame 10 représentée, les chalumeaux vont aussi découper les fers plats 18, et il y a lieu de régler les chalumeaux pour que ces fers plats ne soient découpés que sur une hauteur de quelques centimètres à chaque passage ; en fonction de ce réglage et du nombre de découpes effectuées, il y a lieu de prévoir le remplacement périodique des fers plats 18, cette opération est évidemment facilitée par le fait que les fers plats 18 sont juste posés entre les plots 17, on peut considérer que les fers plats 18 sont de la matière consommable ; du fait que les chalumeaux entament les fers plats 18 lors de chaque découpe, et aussi du fait qu'il est prévu des découpes transversales, on comprend qu'il soit avantageux de disposer les fers plats 18 en biais sur le banc de découpe et non pas perpendiculaires comme les supports latéraux 19, ainsi, lors d'une découpe transversale, l'opérateur n'aura pas à se soucier de savoir si un ou des chalumeaux se trouvent ou non en face d'un fer plat 18 ; après un certain temps d'utilisation de cette installation d'oxycoupage, il est clair que les scories vont s'accumuler dans la fosse 4 c'est pourquoi il est préférable que non seulement les fers plats 18 soient amovibles mais également les supports latéraux 19 de sorte que le curage de la fosse 4 soit facilité.

La mise en oeuvre d'une telle installation de découpe de ferraille par oxycoupage ne présente pas de problèmes particuliers ; après la mise en place d'une ferraille, par exemple une brame, sur le banc de découpe, l'opérateur commande le positionnement initial des chalumeaux, c'est-à-dire de toute la potence avec son caisson étanche, par rapport à la brame, l'opérateur programme alors le ou les mouvements du chariot porte-chalumeaux en vue de la découpe désirée, met en route et effectue le réglage des hottes d'aspiration et des unités de traitement de dépoussiérage et de dénitrification, puis commande l'exécution du programme de découpe. Après une phase initiale de chauffe, la découpe commence effectivement et à ce moment les scories de découpe tombent dans l'eau de la fosse et les diverses fumées sont aspirées puis traitées dans l'unité de traitement. A la fin de l'opération, le programme s'arrête et l'opérateur peut maintenant déplacer la potence le long du banc de découpe 1 de sorte que, d'une part, la brame découpée est dégagée en vue de sa manutention, d'autre part, une autre opération de découpe peut être initialisée.

Avec une telle installation de découpe, il est envisagé de traiter automatiquement, c'est-à-dire sans danger, et avec un taux de pollution extrêmement réduit, des quantités annuelles, ici données à titre indicatif, de 25 000 tonnes de loups de répartiteurs, 50 000 tonnes de brames et chutes de-brames, et 10 000 tonnes de ferrailles diverses en prévoyant deux postes de huit heures de travail par jour.

## Revendications

1. Installation de découpe de ferraille par oxycoupage comportant un banc de découpe (1) pour y déposer la ferraille à découper, une fosse (4) en forme de canal rempli d'eau disposé au-dessous du banc de découpe, lequel banc de découpe est ajouré pour permettre la chute des scories de découpe directement dans l'eau de la fosse, une potence (2) porte-chalumeaux munie de moyens pour porter une pluralité de chalumeaux situés au-dessus de la ferraille à découper, la potence étant mobile sur des rails (3) disposés parallèles au banc de découpe (1) pour déplacer les chalumeaux au fur et à mesure de la progression de la découpe, les chalumeaux étant logés au sein d'un caisson (5) d'aspiration solidaire de la potence pour aspirer les vapeurs, fumées rousses et poussières émises pendant l'opération de découpe, caractérisé en ce que le caisson étanche comporte au moins deux hottes d'aspiration, à savoir, d'une part, une hotte de type classique (90) disposée au-dessus de la zone de découpe et dont l'aspiration s'exerce verticalement vers le haut, d'autre part, une hotte d'aspiration (91) ayant une ouverture longitudinale disposée horizontalement parallèlement au banc de découpe et à la hauteur de celui-ci et dont l'aspiration s'exerce horizontalement dans un sens perpendiculaire au banc de découpe.

2. Installation de découpe de ferraille par oxycoupage selon la revendication 1, caractérisée en ce que dans la fosse (4), partiellement immergés en dessous des fers plats (18), sont prévus des supports latéraux (19) disposés transversalement pour canaliser l'aspiration qui s'exerce horizontalement.

3. Installation de découpe de ferraille par oxycoupage selon la revendication 1 ou 2, caractérisée en ce que le débit d'aspiration de chaque hotte d'aspiration est réglable.

4. Installation de découpe de ferraille par oxycoupage selon la revendication 1, 2 ou 3 caractérisée en ce que les vapeurs, fumées rousses et poussières aspirées par la hotte d'aspiration sont entraînées à travers un conduit de sortie (6) vers une unité de traitement (8) pour, d'une part, un dépoussiérage à l'aide de filtres et, d'autre part, une dénitrification.

5. Installation de découpe de ferraille par oxycoupage selon l'une des revendications 1 à 4, caractérisée en ce que le banc de découpe ajouré est constitué par des fers plats (18) posés sur champ et en biais entre des plots (17) prévus à cet effet sur le pourtour longitudinal de la fosse.

6. Installation de découpe de ferraille par oxycoupage selon l'une quelconque des revendications précédentes, caractérisée en ce que le banc de découpe est assez long pour pouvoir y disposer au moins deux brames.

7. Installation de découpe de ferraille par oxycoupage selon l'une quelconque des revendications précédentes, caractérisée en ce qu'elle comporte deux caissons étanches (5, 5') connectées à une seule et même unité de traitement de dépoussiérage et de dénitrification.

8. Installation de découpe de ferraille par oxycoupage selon l'une quelconque des revendications précédentes, caractérisée en ce qu'un porte-chalumeaux est spécialement aménagé pour porter quatre chalumeaux, lesquels sont animés d'un mouvement dit en croix.

9. Installation de découpe de ferraille par oxycoupage selon l'une quelconque des revendications 1 à 7, caractérisée en ce que les chalumeaux (c1-c10) sont disposés alignés les uns par rapport aux autres et en ce que cet alignement est disposé rotatif sur 90° autour d'un axe vertical pour être disposé soit parallèlement, soit perpendiculairement au banc de découpe.

10. Installation de découpe de ferraille par oxycoupage selon la revendication 9, caractérisée en ce que les chalumeaux sont au nombre de dix avec un écartement entre chacun d'eux variable de 100 mm à 500 mm.

## Claims

1. Installation for cutting scrap iron by oxygen cutting comprising a cutting bench (1) for placing thereon the scrap metal to be cut, a pit (4) in the form of a channel filled with water disposed beneath the cutting bench, which cutting bench comprises holes in order to allow cutting slag to fall directly into the water in the pit, a torch-carrier support (2) provided with means for carrying a plurality of torches situated above the scrap metal to be cut, the support being movable on rails (3) disposed parallel to the cutting bench (1) in order to move the torches as the cutting progresses, the torches being housed inside an evacuation container (5) integral with the support for evacuating the vapours, brown smoke and dust emitted during the cutting operation, characterised in that the leaktight container comprises at least two suction hoods, namely, on the one hand, a hood of conventional type (90) disposed above the cutting zone and whose suction is exerted vertically upwards, on the other hand, a suction hood (91) having a longitudinal opening disposed horizontally and parallel to the cutting bench and at the height of the latter, and whose suction is exerted horizontally in a direction perpendicular to the cutting bench.

2. Installation for cutting scrap iron by oxygen cutting according to Claim 1, characterised in that in the pit (4), partially submerged beneath the flat steel bars (18) lateral supporting members (19) are provided disposed transversely in order to channel the suction which is exerted horizontally.

3. Installation for cutting scrap iron by oxygen cutting according to Claim 1 or 2, characterised in that the evacuation rate of each suction hood is adjustable.

4. Installation for cutting scrap iron by oxygen cutting according to Claim 1, 2 or 3, characterized in that the vapours, brown smoke and dust evacuated by the suction hood are entrained through an exit conduit (6) towards a treatment unit (8) for, on the one hand, dust removal using filters and, on the other hand, denitrification.

5. Installation for cutting scrap iron by oxygen cutting according to one of Claims 1 to 4, characterised in that the cutting bench comprising holes consists of flat steel bars (18) placed edgewise and slantwise between blocks (17) provided for this purpose over the longitudinal perimeter of the pit.

6. Installation for cutting scrap iron by oxygen cutting according to any one of the preceding claims, characterized in that the cutting bench is long enough for at least two slabs to be disposed thereon.

7. Installation for cutting scrap iron by oxygen cutting according to any one of the preceding claims, characterised in that it comprises two leaktight containers (5, 5') connected to one and the same treatment unit for dust removal and denitrification.

8. Installation for cutting scrap iron by oxygen cutting according to any one of the preceding claims, characterised in that one torch-carrier in a specially arranged in order to carry four torches, which are driven in a so-called cross movement.

9. Installation for cutting scrap iron by oxygen cutting according to any one of Claims 1 to 7, characterised in that the torches (c1-c10) are disposed aligned with respect to each other and in that this alignment is disposed rotatable through 90° around a vertical axis in order to be disposed either parallel, or perpendicularly to the cutting bench.

10. Installation for cutting scrap iron by oxygen cutting according to Claim 9, characterised in that there are ten torches with a spacing between each of them varying from 100 mm to 500 mm.

## Patentansprüche

1. Brennschneidmaschine, umfassend eine Schneidbank (1) zum Auflegen des zu zerschneidenden Schrottes, eine kanalförmige, mit Wasser gefüllte Grube (4), die unter der Schneidbank angeordnet ist, wobei die Schneidbank durchbrochen ist, um zu ermöglichen, daß die Schneidschlacke direkt ins Wasser der Grube fällt, einen Brenner tragenden Träger (2), der mit Mitteln zum Tragen einer Vielzahl von Brennern versehen ist, die sich über dem zu zerschneidenden Schrott befinden, wobei der Träger auf Schienen (3) beweglich ist, die parallel zur Schneidbank (1) angeordnet sind, um die Brenner entsprechend dem Voranschreiten des Schneidvorganges zu bewegen, wobei sich die Brenner im Inneren eines mit dem Träger fest verbundenen Abzugskastens (5) zum Absaugen der Dämpfe, des braunen Rauchs und des Staubs, die während des Schneidvorganges abgegeben werden, befinden, dadurch gekennzeichnet, daß der abgedichtete Kasten mindestens zwei Abzugshauben aufweist, nämlich einerseits eine herkömmliche Abzugshaube (90), die über dem Schneidbereich angeordnet ist und deren Absaugen vertikal nach oben erfolgt, und andererseits eine Abzugshaube (91) mit einer in Längsrichtung verlaufenden Öffnung, die horizontal parallel zur Schneidbank und in deren Höhe angeordnet ist und deren Absaugen horizontal in einer zur Schneidbank senkrechten Richtung erfolgt.

2. Brennschneidmaschine nach Patentanspruch 1, dadurch gekennzeichnet, daß in der Grube (4), unterhalb der Flacheisen (18) teilweise eingetaucht Seitenträger (19) vorgesehen sind, die quer angeordnet sind, um das horizontal erfolgende Absaugen zu kanalisieren.

3. Brennschneidmaschine nach Patentanspruch 1 oder 2, dadurch gekennzeichnet, daß die Absaugleistung jeder der Abzugshauben einstellbar ist.

4. Brennschneidmaschine nach Patentanspruch 1, 2 oder 3, dadurch gekennzeichnet, daß die Dämpfe, der braune Rauch und der Staub, die durch die Abzugshaube abgesaugt werden, durch eine Ausgangsleitung (6) einerseits zur Entstaubung mit Hilfe von Filtern und andererseits zur Denitrifizierung zu einer Behandlungseinheit (8) befördert werden.

5. Brennschneidmaschine nach einem der Patentansprüche 1 bis 4, dadurch gekennzeichnet, daß die durchbrochene Schneidbank aus Flacheisen (18) besteht, die hochkant und schräg zwischen Klötzen (17) angeordnet sind, die zu diesem Zweck auf dem Umfang der Grube in Längsrichtung vorgesehen sind.

6. Brennschneidmaschine nach irgendeinem der vorangehenden Patentansprüche, dadurch gekennzeichnet, daß die Schneidbank ausreichend lang ist, um auf ihr mindestens zwei Brammen anordnen zu können.

7. Brennschneidmaschine nach irgendeinem der vorangehenden Patentansprüche, dadurch gekennzeichnet, daß sie zwei abgedichtete Kästen (5, 5') aufweist, die mit ein- und derselben Behandlungseinheit zur Entstaubung und Denitrifizierung verbunden sind.

8. Brennschneidmaschine nach irgendeinem der vorangehenden Patentansprüche, dadurch gekennzeichnet, daß ein Brennerträger speziell zum Tragen von vier Brennern eingerichtet ist, die eine 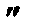 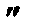 kreuzförmig" genannte Bewegung ausführen.

9. Brennschneidmaschine nach irgendeinem der Patentansprüche 1 bis 7, dadurch gekennzeichnet, daß die Brenner (c1 - c10) relativ zueinander ausgerichtet sind und daß diese Reihe um 90° um eine vertikale Achse drehbar montiert ist, um entweder parallel oder senkrecht zur Schneidbank angeordnet zu werden.

10. Brennschneidmaschine nach Patentanspruch 9, dadurch gekennzeichnet, daß es sich um zehn Brenner mit einem zwischen 100 mm und 500 mm veränderlichen Abstand zwischeneinander handelt.
